# EUROPÄISCHE PATENTSCHRIFT

(11) **EP 1 221 397 B1**
(45) Veröffentlichungstag und Bekanntmachung des Hinweises auf die Patenterteilung: **29.03.2006**
(21) Anmeldenummer: 01130952.3
(22) Anmeldetag: 28.12.2001
(51) Int. Cl.: B60N 3/04

(54) **Fussbodenbelag für ein Kraftfahrzeug**
Floor covering for a vehicle
Revêtement de sol pour un véhicule

(30) Priorität: 04.01.2001 DE 10100283
(43) Veröffentlichungstag der Anmeldung: 10.07.2002
(73) Patentinhaber: Dura Tufting GmbH, D-36043 Fulda (DE)
(72) Erfinder: Gensler, Manfred, 36145 Hofbiber (DE)
(74) Vertreter: Luderschmidt, Schüler & Partner GbR

(56) Entgegenhaltungen:
- WO-A-97/06029
- DE-A- 19 617 408
- DE-A- 19 805 949
- DE-A- 19 823 230
- DE-U- 8 224 007
- DE-U- 20 001 405
- GB-A- 2 215 600
- US-A- 5 666 691

## Beschreibung

Die vorliegende Erfindung betrifft einen Fußbodenbelag für ein Kraftfahrzeug mit einem Bodenbelag und mindestens einer Befestigungsanordnung zur Befestigung einer Zusatzmatte an dem Bodenbelag.

Aus dem Stand der Technik sind unterschiedliche Fußbodenbeläge für Kraftfahrzeuge bekannt, die einen Bodenbelag, der zumeist direkt auf der Karosserie aufliegt, mehrere Befestigungsanordnungen und mehrere Zusatzmatten umfassen, wobei letztere mittels der Befestigungsanordnungen an dem Bodenbelag befestigt werden können.

Die DE 198 23 230 A1 offenbart einen Fußbodenbelag für ein Automobil, der einen Teppichboden und daran befestigbare Fußbodenmatten aufweist. Auf dem Teppichboden ist eine erhabene Basisplatte mit einem nach oben weisenden Pfosten vorgesehen, der ein radial nach außen ausgedehntes Kopfteil aufweist. Die Basisplatte ist an dem Teppichboden befestigt, indem sich Schenkel von der Basisplatte durch ein Loch in dem Teppichboden erstrecken, um diesen zu hintergreifen. In der Fußbodenmatte ist ebenfalls ein Loch vorgesehen, dessen Ränder mittels eines festen Verstärkungsteiles verstärkt sind. Um die Fußbodenmatte an dem Teppichboden zu befestigen, wird der Pfosten durch das Loch in der Fußbodenmatte geschoben bis das Kopfteil an der Oberseite der Fußbodenmatte hervorragt und das Verstärkungsteil hintergreift. Ein ähnlicher Fußbodenbelag ist aus der GB 2 215 600 A bekannt. Die Zusatzmatte wird bei dem bekannten Fußbodenbelag mittels einer Schraube befestigt, deren Kopf auf der Oberfläche der Zusatzmatte angeordnet ist.

Ein weiterer Fußbodenbelag für einen Kraftwagen ist aus der DE 198 05 949 A1 bekannt. Dieser Fußbodenbelag setzt sich ebenfalls aus einem Bodenbelag und einer Fußmatte zusammen, wobei die Fußmatte mittels einer Befestigungsanordnung an dem Bodenbelag befestigt werden kann. Die Befestigungsanordnung weist ein Befestigungselement auf, das als erhabenes Teil an dem Bodenbelag befestigt ist. Wie bereits bei dem zuvor beschriebenen Stand der Technik, ist auch in diesem Fall ein Loch in der Fußmatte vorgesehen, dessen Rand mittels eines Verstärkungsteiles verstärkt ist. Um die Fußmatte an dem Bodenbelag zu befestigen, wird das Loch oberhalb des erhabenen Befestigungselementes angeordnet, wobei das Verstärkungsteil auf dem erhabenen Befestigungselement aufliegt. Im Anschluß daran wird ein Bajonetteil von oben durch das Loch in eine Aufnahme in dem Befestigungselement gesteckt und derart verdreht, daß das Bajonetteil formschlüssig in dem Befestigungselement einliegt, wobei ein scheibenförmiger Kopf des Bajonetteiles von oben auf die Fußmatte drückt.

Der vorbeschriebene Stand der Technik ist mit verschiedenen Nachteilen behaftet. Unter anderem ist der Fahrkomfort bei den bekannten Fußbodenbelägen eingeschränkt, da die Fußfreiheit durch die Befestigungselemente eingeschränkt ist. Darüber hinaus bieten die bekannten Fußbodenbeläge keine große Sicherheit gegen ein Lösen der Zusatz- bzw. Fußmatte von dem Teppichboden bzw. Bodenbelag. Des weiteren ist festzustellen, daß eine Reinigung des Teppichbodens bzw. Bodenbelages nachdem Zusatz- bzw. Fußmatte entfernt wurden erschwert ist.

Um den genannten Nachteilen zu begegnen, schlägt die DE 196 17 408 einen Fußbodenbelag vor, bei dem der Bodenbelag ein männliches Steckteil aufweist, das in ein weibliches Steckteil in der Zusatzmatte gesteckt werden kann. Das weibliche Steckteil erstreckt sich jedoch auch bis über die Oberfläche der Zusatzmatte hinaus, so daß die Fußfreiheit eingeschränkt ist.

Aus der DE 82 24 007 U1 ist ein ähnlicher Fußbodenbelag bekannt, wobei das männliche Steckteil an der Zusatzmatte und das weibliche Steckteil an dem Bodenbelag angeordnet ist. Obwohl das männliche Steckteil sich nicht bis zur Oberseite der Zusatzmatte erstreckt, sondern vielmehr in die Zusatzmatte eingearbeitet ist und sich nach unten erstreckt, ist der Fahrkomfort bzw. die Fußfreiheit eingeschränkt.

Ebenso verhält es sich bei dem aus der WO 97/06029 bekannten Fußbodenbelag, bei dem an der Unterseite der Zusatzmatte ein erhabenes Klettverschlußelement vorgesehen ist, das mit einem zweiten in den Bodenbelag eingelassenen Klettverschlußelement verbunden werden kann.

Aus der gattungsbildenden DE 200 01 405 U1 ist ferner ein Fußbodenbelag bekannt, bei dem an der Unterseite der Zusatzmatte ein Befestigungselement vorgesehen ist, das hervorsteht und einen plattenförmigen Teil und einen Schaftteil umfasst. Der Schaftteil kann in eine entspechende Ausnehmung in dem Bodenbelag eingeführt werden.

Der vorliegenden Erfindung liegt somit die Aufgabe zugrunde, einen Fußbodenbelag für ein Kraftfahrzeug mit einem Bodenbelag und einer Zusatzmatte zu schaffen, der einen höheren Fahrkomfort gewährleistet, wobei die Reinigung des Bodenbelages vereinfacht sein soll.

Die Lösung dieser Aufgabe erfolgt anhand der im Patentanspruch 1 angegebenen Merkmale. Bevorzugte Ausführungsformen der Erfindung sind Gegenstand der Unteransprüche.

Der erfindungsgemäße Fußbodenbelag kommt in Kraftfahrzeugen zum Einsatz, wobei unter Kraftfahrzeugen sowohl Automobile als auch andere Verkehrsmittel wie beispielsweise Flugzeuge zu verstehen sind. Der Fußbodenbelag weist einen Bodenbelag und mindestens eine Befestigungsanordnung zur Befestigung einer Zusatzmatte an dem Bodenbelag auf. Die Befestigungsanordnung weist ein erstes Befestigungselement auf, das lösbar mit einem komplementären zweiten Befestigungselement verbunden werden kann, das an der Zusatzmatte vorgesehen ist. Das zweite Befestigungselement ist an der Zusatzmatte befestigt, wohingegen das erste Befestigungselement in den Bodenbelag eingelassen ist. Dabei ist das nach oben weisende distale Ende des ersten Befestigungselementes höchstens auf einer Ebene mit der Florseite des Bodenbelages angeordnet. Darunter kann zweierlei verstanden werden. Zum einen ist es möglich, daß der Bodenbelag im Bereich des ersten Befestigungselements eine Aussparung aufweist, innerhalb derer das erste Befestigungselement angeordnet ist, so daß das distale Ende in oder unterhalb der Ebene der Florseite angeordnet ist. Zum anderen kann darunter verstanden werden, daß der Bodenbelag im Bereich des ersten Befestigungselements nach unten gewölbt ist, wobei das erste Befestigungselement in der Wölbung angeordnet ist. In diesem Fall liegt das distale Ende des ersten Befestigungselements unterhalb oder in der Ebene, die von der Florseite ohne die Wölbung des Bodenbelages vorgegeben wäre. Der erfindungsgemäße Fußbodenbelag (wie im Anspruch 1 definiert) umfaßt ferner mindestens eine Zusatzmatte, und die Befestigungsanordnung weist ein zweites Befestigungselement auf. Das zweite Befestigungselement kann lösbar mit dem ersten Befestigungselement verbunden werden und ist an der Rückseite der Zusatzmatte befestigt, so daß es im verbundenen Zustand unsichtbar ist. Dies bedeutet, daß das zweite Befestigungselement beliebig an der Rückseite befestigt sein kann, solange das zweite Befestigungselement nicht von der Florseite der Zusatzmatte zugänglich, sondern verdeckt und somit unsichtbar ist.

Gemäß der Erfindung ragt das erste Befestigungselement nicht über eine Ebene hinaus, auf der sich die Füße eines Fahrers bewegen. Ein Anstoßen der Füße gegen das erste Befestigungselement ist dadurch nicht möglich, so daß einerseits ein großer Fahrkomfort gewährleistet und andererseits eine Beschädigung des ersten Befestigungselementes verhindert wird. Darüber hinaus ist der Bodenbelag einfach zu reinigen, da auch ein Anstoßen eines Staubsaugers o. ä. an dem ersten Befestigungselement ausgeschlossen ist. Aufgrund der besonderen Anordnung von erstem und zweitem Befestigungselement werden verschiedene Vorteile erzielt. Erstens kann die Zusatzmatte derart auf dem Bodenbelag befestigt werden, daß die Zusatzmatte die Oberflächenform des darunterliegenden Bodenbelages exakt nachvollzieht, ohne daß nach oben gerichtete Wölbungen direkt oberhalb der Verbindungsstelle auftreten. Dies ist darauf zurückzuführen, daß das erste Befestigungselement in den Bodenbelag eingelassen ist, so daß das damit verbundene zweite Befestigungselement komplett darin aufgenommen werden kann, ohne die Zusatzmatte in diesem Bereich zu erhöhen wie dies bei den Fußbodenbelägen aus der DE 82 24 007 U1 und der WO 97/06029 der Fall ist. Dadurch wird der Fahrkomfort erhöht, da die Abstellfläche für die Füße eines Fahrers ebenmäßiger ist. Darüber hinaus kann kein unbeabsichtigtes seitliches Anstoßen an eine derartige Wölbung erfolgen, was zu einem Lösen der Befestigungsanordnung und gegebenenfalls zu deren Beschädigung führen kann. Zweitens ist die Zusatzmatte dadurch sicherer an dem Bodenbelag befestigt, daß die Befestigungsanordnung von oben nicht sichtbar und somit verdeckt und nicht zugänglich ist. Ein unbeabsichtigtes Lösen derselben durch Anstoßen mit dem Fuß ist ausgeschlossen. Drittens wird der ästhetische Gesamteindruck nicht durch sichtbare Befestigungsanordnungen gestört.

Das zweite Befestigungselement weist einen vorspringenden Ansatz auf, der in eine Ausnehmung in dem ersten Befestigungselement paßt. Ausnehmung und vorspringender Ansatz können beliebig geformt sein, müssen allerdings ineinander passen. So ist beispielsweise ein rechteckiger vorspringender Ansatz und eine korrespondierende Ausnehmung möglich.

Das zweite Befestigungselement weist ferner eine der Zusatzmatte zugewandte Platte auf, die an der Rückseite der Zusatzmatte befestigt ist. Die Platte stellt eine große Verbindungsfläche zwischen Rückseite und dem zweiten Befestigungselement zur Verfügung, so daß eine hohe Stabilität erzielt wird. Vorzugsweise ist die Platte an der Rückseite festgeklebt oder angeschweißt. Als Schweißverfahren käme hierbei beispielsweise ein Ultraschall-Schweißverfahren in Frage.

Zwischen der Oberseite des Bodenbelages und dem nach oben weisenden distalen Ende des ersten Befestigungselements ist ein Abstand vorgesehen, so daß oberhalb des ersten Befestigungselements ein Freiraum besteht, in den die Platte eingelegt werden kann. Auf diese Weise kann das weibliche Forrnschlußteil einfacher bzw. kleiner gestaltet sein, da es keine Aufnahme für die Platte zur Verfügung stellen muß, um eine nach oben weisende Wölbung in der Zusatzmatte zu verhindern.

In einer bevorzugten Ausführungsform des erfindungsgemäßen Fußbodenbelages ist mindestens eine Abdeckkappe vorgesehen, die mit dem ersten Befestigungselement lösbar verbunden werden kann. Unter einer Abdeckkappe ist ein Teil zu verstehen, daß das erste Befestigungselement nach oben abdeckt, so daß dieses nicht sichtbar ist. Das nach oben weisende distale Ende der Abdeckkappe ist bei angebrachter Abdeckkappe in einer Ebene mit der Florseite des Bodenbelages angeordnet. Die Abdeckkappe verhindert einerseits eine Verschmutzung des ersten Befestigungselementes und trägt andererseits zur Verbesserung des optischen Eindruckes bei.

In einer weiteren Ausführungsform der Erfindung weist der vorspringende Ansatz eine erste umlaufende Kante auf, die von einer zweiten umlaufenden Kante in der Ausnehmung hintergreifbar ist. Unter der ersten umlaufenden Kante ist ein Vorsprung zu verstehen, der sich um den gesamten vorspringenden Ansatz erstreckt und radial nach außen weist, wohingegen sich die zweite umlaufende Kante entlang des Umfangs der Ausnehmung erstreckt und radial nach innen weist. Die Kante kann sowohl durchgehend als auch unterbrochen ausgebildet sein.

Der vorspringende Ansatz und die Ausnehmung sind vorzugsweise im wesentlichen zylindrisch ausgebildet, so daß ein Zusammenstecken auch bei beliebiger Ausrichtung von Zusatzmatte und Bodenbelag zueinander möglich ist.

In einer besonders bevorzugten Ausführungsform des erfindungsgemäßen Fußbodenbelages wird die zweite umlaufende Kante von mehreren Kantenabschnitten gebildet. Darunter ist zu verstehen, daß die Kante unterbrochen ausgebildet ist. Die Kantenabschnitte sind elastisch radial nach außen verschiebbar. Vorzugsweise drücken die Kantenabschnitte bei eingesetztem vorspringenden Ansatz seitlich gegen den vorspringenden Ansatz. Auf diese Weise ist der vorspringende Ansatz formschlüssig und kraftschlüssig in der Ausnehmung befestigt, so daß ein sicherer Halt der Zusatzmatte an dem Bodenbelag gewährleistet ist.

Um eine hohe Befestigungsstabilität des zweiten Befestigungselements an der Zusatzmatte zu gewährleisten, ist die Platte in einer vorteilhaften Ausführungsform der Erfindung mit der Rückseite der Zusatzmatte verklebt oder verschweißt.

Der erfindungsgemäße Fußbodenbelag (wie im Anspruch 1 definiert) weist einen Bodenbelag und mindestens eine Befestigungsanordnung zur Befestigung einer Zusatzmatte an dem Bodenbelag auf. Die Befestigungsanordnung weist ein erstes Befestigungselement auf, das lösbar mit einem komplementären zweiten Befestigungselement verbunden werden kann, das an der Zusatzmatte vorgesehen ist. Das zweite Befestigungselement ist an der Zusatzmatte befestigt, wohingegen das erste Befestigungselement in den Bodenbelag eingelassen ist. Dabei ist das nach oben weisende distale Ende des ersten Befestigungselementes höchstens auf einer Ebene mit der Florseite des Bodenbelages angeordnet. Darunter kann zweierlei verstanden werden. Zum einen ist es möglich, daß der Bodenbelag im Bereich des ersten Befestigungselements eine Aussparung aufweist, innerhalb derer das erste Befestigungselement angeordnet ist, so daß das distale Ende in oder unterhalb der Ebene der Florseite angeordnet ist. Zum anderen kann darunter verstanden werden, daß der Bodenbelag im Bereich des ersten Befestigungselements nach unten gewölbt ist, wobei das erste Befestigungselement in der Wölbung angeordnet ist. In diesem Fall liegt das distale Ende des ersten Befestigungselements unterhalb oder in der Ebene, die von der Florseite ohne die Wölbung des Bodenbelages vorgegeben wäre. Gemäß einer Weiterbildung der Erfindung ist mindestens eine Abdeckkappe vorgesehen, die mit dem ersten Befestigungselement lösbar verbunden werden kann. Unter einer Abdeckkappe ist ein Teil zu verstehen, daß das erste Befestigungselement nach oben abdeckt, so daß dieses nicht sichtbar ist. Das nach oben weisende distale Ende der Abdeckkappe ist bei angebrachter Abdeckkappe in einer Ebene mit der Florseite des Bodenbelages angeordnet. Die Abdeckkappe verhindert einerseits eine Verschmutzung des ersten Befestigungselementes und trägt andererseits zur Verbesserung des optischen Eindruckes bei. Darüber hinaus wird dadurch der Fahrkomfort erhöht, da die Abstellfläche für die Füße des Fahrers ebenmäßiger ist.

Im folgenden wird die Erfindung anhand von Ausführungsbeispielen unter Bezugnahme auf die beigefügten Figuren eingehender erläutert.

Es zeigen:
- Fig. 1: eine Seitenansicht des erfindungsgemäßen Fußbodenbelages in einer ersten Ausführungsform in geschnittener Darstellung,
- Fig. 2: den Ausschnitt A von Fig. 1 in vergrößerter Darstellung,
- Fig. 3: eine Seitenansicht des erfindungsgemäßen Fußbodenbelages in einer zweiten Ausführungsform in geschnittener Darstellung, wobei der Fußbodenbelag eine Zusatzmatte umfaßt,
- Fig. 4: den Ausschnitt B von Fig. 3 in vergrößerter Darstellung und
- Fig. 5: den Ausschnitt B von Fig. 4 in einer abgewandelten Ausführungsform.

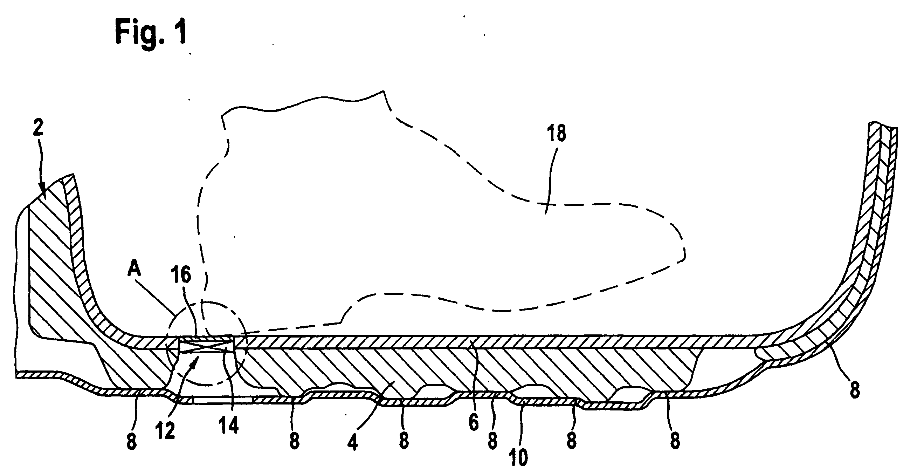

Fig. 1 zeigt den Fußraum innerhalb eines Kraftfahrzeuges in einer Seitenansicht in geschnittener Darstellung, wobei in dem Fußraum der erfindungsgemäße Fußbodenbelag in einer ersten Ausführungsform angebracht ist. In der ersten Ausführungsform weist der Fußbodenbelag einen Bodenbelag 2 auf, wobei der Bodenbelag 2 aus einer Unterschicht 4 und einer Oberschicht 6 besteht. Die Unterschicht 4 besitzt eine vorgegebene Oberflächenstruktur, so daß sich der Bodenbelag 2 an vorbestimmten Stellen 8 an der Karosserie 10 des Fahrzeuges abstützen kann. Die Oberschicht 6 hingegen ist dem Fußraum des Fahrzeuges zugewandt.

Der Fußbodenbelag weist ferner eine Befestigungsanordnung 12 auf, die ein erstes Befestigungselement 14 umfaßt, das lösbar mit einem an einer nicht dargestellten Zusatzmatte angeordneten zweiten Befestigungselement verbunden werden kann. Das erste Befestigungselement 14 ist an dem Bodenbelag 2 befestigt und ist in der ersten Ausführungsform von einer Abdeckkappe 16 bedeckt. Die Abdeckkappe 16 ist lösbar mit dem ersten Befestigungselement 14 verbunden und deckt dieses nach oben ab, so daß kein Schmutz an das erste Befestigungselement 14 gelangen kann.

Obwohl die Abdeckkappe 16 und das erste Befestigungselement 14 in Fig. 1 lediglich schematisch dargestellt sind, so gehen aus der Fig. 1 dennoch die Vorteile des erfindungsgemäßen Fußbodenbelages in dieser ersten Ausführungsform hervor.

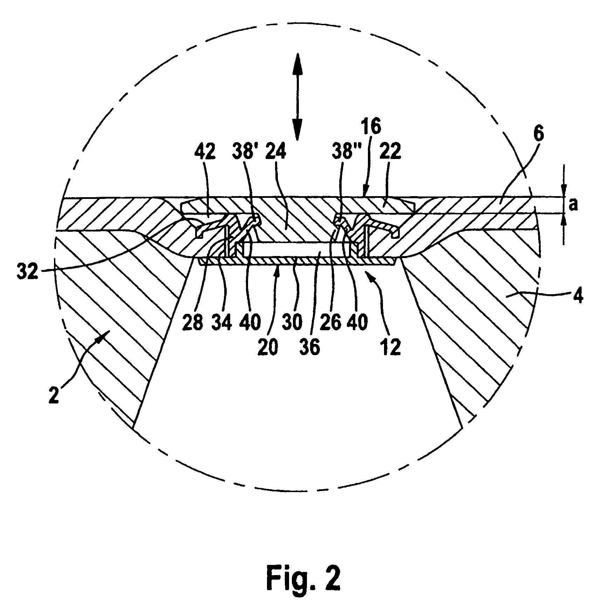

Durch die spezielle Ausbildung der Befestigungsanordnung 12 bzw. des ersten Befestigungselements 14 ist ein hoher Fahrkomfort gewährleistet, da das Befestigungselement 14 nicht in den Bewegungsbereich der Füße 18 innerhalb des Fußraumes ragt. Ein unbeabsichtigtes Anstoßen gegen das Befestigungselement 14 und eine mögliche Beschädigung desselben ist ausgeschlossen. Ferner verhindert die Abdeckkappe 16 ein Verschmutzen des Befestigungselements 14 und ragt ihrerseits ebenfalls nicht in den Fußraum, wobei die Ausbildung des Befestigungselements 14 sowie der Abdeckkappe 16 im folgenden unter Bezugnahme auf Fig. 2 eingehender beschrieben wird.

Fig. 2 zeigt die Befestigungsanordnung 12, die ein erstes Befestigungselement 20 umfaßt, und die Abdeckkappe 16. Die Abdeckkappe 16 umfaßt eine kreisrunde Platte 22, in deren Mittelpunkt ein vorspringender Ansatz 24 vorgesehen ist. Der vorspringende Ansatz 24 ist im wesentlichen zylindrisch ausgebildet und weist ferner an dem der Platte 22 abgewandten Ende eine erste umlaufende Kante 26 auf, die sich radial nach außen erstreckt und um den zylindrischen vorspringenden Ansatz 24 herumführt.

Das erste Befestigungselement 20 umfaßt ein im wesentlichen rohrförmiges Element 28 und eine Verschlußplatte 30. An dem rohrförmigen Element 28 ist einenendes ein radial nach außen und schräg nach unten weisender Kragen 32 vorgesehen. Der Durchmesser des rohrförmigen Elementes 28 ist nur unwesentlich geringer als der Durchmesser eines Loches 34 in der Oberschicht 6 des Bodenbelages 2, wobei die Unterschicht 4 im Bereich unterhalb des Loches 34 unterbrochen ist. Das rohrförmige Element 28 ist derart in das Loch 34 in der Oberschicht 6 eingesetzt, daß der Kragen 32, dessen Durchmesser größer als der des Loches 34 ist, auf der Oberseite der Oberschicht 6 aufliegt. Die Verschlußplatte 30, die ebenfalls einen größeren Durchmesser als das Loch 34 aufweist, ist an dem Ende des rohrförmigen Elementes 28 befestigt, das dem kragenseitigen Ende gegenüberliegt, so daß die Verschlußplatte 30 das rohrförmige Element 28 an diesem Ende verschließt und die Oberschicht 6 an deren Unterseite untergreift. Es ist ersichtlich, daß die Unterbrechung der Unterschicht 4 des Bodenbelages 2 die Anbringung der Verschlußplatte 30 an dem eingesetzten rohrförmigen Element 28 ermöglichen soll. Das erste Befestigungselement 20 ist somit fest mit dem Bodenbelag 2 verklemmt, wobei innerhalb des ersten Befestigungselementes 20 eine nach oben weisende Ausnehmung 36 ausgebildet ist. Innerhalb dieser Ausnehmung 36 ist darüber hinaus eine zweite umlaufende Kante ausgebildet, die sich an dem kragenseitigen Ende des rohrförmigen Elementes 28 radial nach innen erstreckt. Die zweite umlaufende Kante in der Ausnehmung 36 wird von mehreren Kantenabschnitten 38',38" gebildet, von denen lediglich zwei dargestellt sind. Die Kantenabschnitte 38',38" sind jeweils am Ende einer elastisch verformbaren Zunge 40 angeordnet, wobei sich die Zungen 40 ausgehend von der Wandung der Ausnehmung 36 radial und schräg nach innen erstrecken. Eine derartige Ausbildung gewährleistet geringen Verschleiß im Bereich der umlaufenden Kanten 26,38',38", so daß auch noch nach mehrmaligem Abnehmen und Wiederanbringen der Abdeckkappe 16 eine sichere Fixierung derselben möglich ist. Der Querschnitt der umlaufenden Kante 26 bzw. der Kantenabschnitte 38',38" ist in der Form einer Klinke augebildet. Die Kantenabschnitte 38',38" drücken in dem in Fig. 2 dargestellten verbundenen Zustand seitlich gegen den vorspringenden Ansatz 24, so daß dieser kraft- und formschlüssig in der Ausnehmung 36 befestigt ist.

Das erste Befestigungselement 20 ist in den Bodenbelag 2 eingelassen. Dies bedeutet in der vorliegenden Ausführungsform, daß das erste Befestigungselement 20 in einer Wölbung angeordnet ist, so daß das distale nach oben weisende Ende des rohrförmigen Elementes 28 höchstens auf einer Höhe mit der Oberseite der Oberschicht liegt. Da die Abdeckkappe 16 allerdings die Platte 22 aufweist, ist das erste Befestigungselement 20 derart weit eingelassen, daß zwischen dem besagten distalen Ende des rohrförmigen Elementes 28 und der Oberseite der Oberschicht 6 des Bodenbelages 2 ein Abstand a besteht, der der Dicke der Platte 22 entspricht. Somit ist in dem Bereich oberhalb des ersten Befestigungselements 20 ein Freiraum 42 ausgebildet, in dem die Platte 22 Abdeckkappe 16 vollständig einliegt, so daß deren distales nach oben weisendes Ende in einer Ebene mit der Florseite des Bodenbelages 2 angeordnet ist und nicht in den Bewegungsraum der Füße des Fahrers ragt.

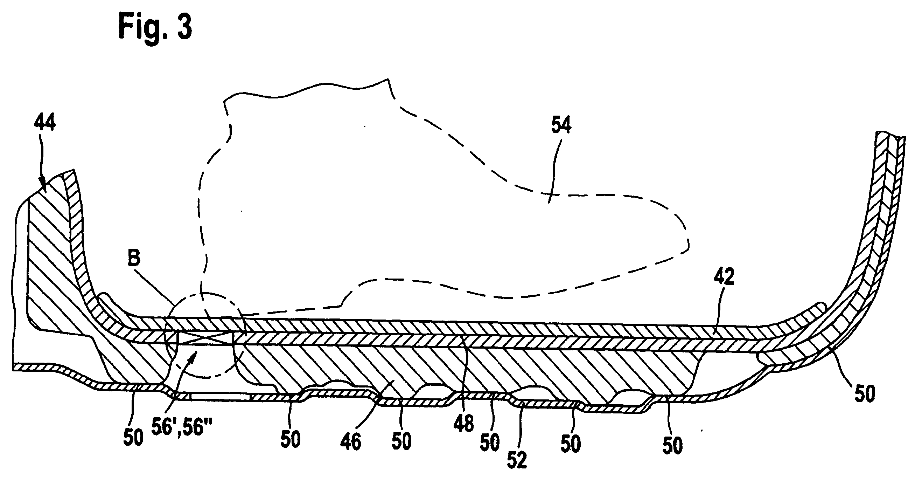

Fig. 3 zeigt den Fußraum innerhalb eines Kraftfahrzeuges in einer Seitenansicht in geschnittener Darstellung, wobei in dem Fußraum der erfindungsgemäße Fußbodenbelag in einer zweiten Ausführungsform angebracht ist. Die zweite Ausführungsform unterscheidet sich dahingehend von der ersten Ausführungsform des Fußbodenbelages, daß mindestens eine Zusastzmatte 42 vorgesehen ist. Der Fußbodenbelag in der zweiten Ausführungsform weist somit einen Bodenbelag 44 auf, wobei der Bodenbelag 44 aus einer Unterschicht 46 und einer Oberschicht 48 besteht. Wie bei der ersten Ausführungsform besitzt die Unterschicht 46 eine vorgegebene Oberflächenstruktur, so daß sich der Bodenbelag 44 an vorbestimmten Stellen 50 an der Karosserie 52 des Fahrzeuges abstützen kann. Im Bereich des Fußraumes liegt auf dem Bodenbelag 44 die Zusatzmatte 42 auf, die dem Schutz des darunter angeordneten Bodenbelages 44, insbesondere dem Schutz der Oberschicht 48, vor Verunreinigung oder Belastung durch den Fuß 54 des Fahrers bzw. Mitfahrers dient. Die Zusatzmatte 44 ist mittels einer Befestigungsanordnung 56',56" mit dem Bodenbelag 2 lösbar verbunden, wobei die Befestigungsanordnung 56',56" in Fig. 3 lediglich schematisch dargestellt ist.

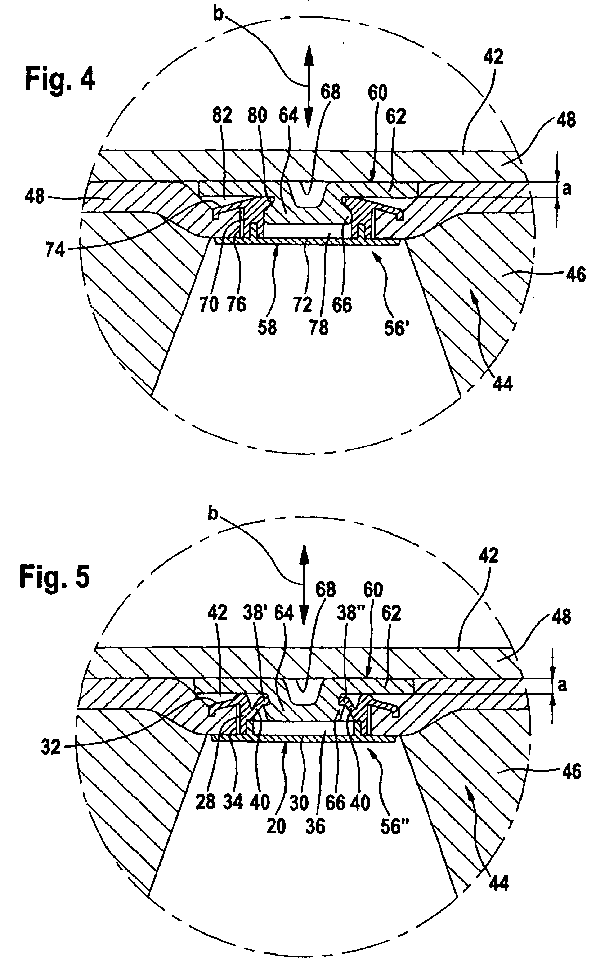

Aus Fig. 3 gehen die besonderen Vorteile des Fußbodenbelages in der zweiten Ausführungsform hervor. Durch die spezielle Ausbildung der Befestigungsanordnung 56',56" ist ein hoher Fahrkomfort gewährleistet, da keinerlei Aufwölbung der Zusatzmatte 42 in Richtung des Fußraumes unmittelbar oberhalb der Befestigungsanordnung 56',56" erfolgt. Vielmehr vollzieht die Zusatzmatte 42 die durch den Bodenbelag 44 vorgegebene Kontur nach und liegt somit ebenmäßig auf dem Bodenbelag 44 auf, so daß die Bewegungsfreiheit der Füße 54 nicht eingeschränkt ist. Ein unbeabsichtigtes Anstoßen gegen die Befestigungsanordnung 56',56" und eine mögliche Beschädigung derselben ist ausgeschlossen, wobei die Ausbildung der Befestigungsanordnung 56',56" im folgenden unter Bezugnahme auf die Fig. 4 bzw. 5 eingehender beschrieben wird.

Fig. 4 zeigt die Befestigungsanordnung in einer ersten Ausführungsform 56'. Die Befestigungsanordnung 56' umfaßt ein erstes Befestigungselement 58 und ein zweites Befestigungselement 60. Das zweite Befestigungselement 60 umfaßt eine kreisrunde Platte 62, in deren Mittelpunkt ein vorspringender Ansatz 64 vorgesehen ist. Der vorspringende Ansatz 64 ist im wesentlichen zylindrisch ausgebildet und weist ferner an dem der Platte 62 abgewandten Ende eine erste umlaufende Kante 66 auf, die sich radial nach außen erstreckt und um den zylindrischen vorspringenden Ansatz 64 herumführt. Die Platte 62 ist mit ihrer dem vorspringenden Ansatz 64 abgewandten Seite an der Rückseite 68 der Zusatzmatte 42 befestigt, vorzugsweise angeklebt oder angeschweißt, wobei unter der Rückseite 68 die dem Bodenbelag 44 im verbundenen Zustand zugewandte Seite der Zusatzmatte 42 zu verstehen ist.

Das erste Befestigungselement 58 umfaßt ein im wesentlichen rohrförmiges Element 70 und eine Verschlußplatte 72. An dem rohrförmigen Element 70 ist einenendes ein radial nach außen und schräg nach unten weisender Kragen 74 vorgesehen. Der Durchmesser des rohrförmigen Elementes 70 ist nur unwesentlich geringer als der Durchmesser eines Loches 76 in der Oberschicht 48 des Bodenbelages 44, wobei die Unterschicht 46 im Bereich unterhalb des Loches 76 unterbrochen ist. Das rohrförmige Element 70 ist derart in das Loch 76 in der Oberschicht 48 eingesetzt, daß der Kragen 74 auf der Oberseite der Oberschicht 48 aufliegt. Die Verschlußplatte 72 ist derart an dem Ende des rohrförmigen Elementes 70 befestigt, das dem kragenseitigen Ende gegenüberliegt, daß die Verschlußplatte 72 das rohrförmige Element 70 an diesem Ende verschließt und die Oberschicht 48 an deren Unterseite untergreift. Das erste Befestigungselement 58 ist somit fest mit dem Bodenbelag 44 verklemmt, wobei innerhalb des ersten Befestigungselementes 58 eine nach oben weisende Ausnehmung 78 ausgebildet ist. Innerhalb dieser Ausnehmung 78 ist eine zweite umlaufende Kante 80 ausgebildet, die sich an dem kragenseitigen Ende des rohrförmigen Elementes 70 radial nach innen erstreckt. Die zweite umlaufende Kante 80 führt durchgehend um die Ausnehmung 78 herum und ist wulstartig ausgebildet.

Das erste Befestigungselement 58 ist in den Bodenbelag 44 eingelassen. Wie bei der ersten Ausführungsform, liegt das distale nach oben weisende Ende des rohrförmigen Elementes 70 höchstens auf einer Höhe mit der Oberseite der Oberschicht 48 bzw. der Florseite des Bodenbelages 44. Da das zweite Befestigungselement 60 die Platte 62 aufweist, ist das erste Befestigungselement 58 derart weit eingelassen, daß zwischen dem besagten distalen Ende des rohrförmigen Elementes 70 und der Oberseite der Oberschicht 48 des Bodenbelages 44 ein Abstand a besteht, der der Dicke der Platte 62 entspricht. Somit ist in dem Bereich oberhalb des ersten Befestigungselements 58 ein Freiraum 82 ausgebildet, in dem die Platte 62 vollständig einliegt.

Fig. 4 zeigt die Zusatzmatte 42 und den Bodenbelag 44 im verbundenen Zustand, in dem die Platte 62 innerhalb des Freiraumes 82 und der vorspringende Ansatz 64 in der Ausnehmung 78 einliegt, wobei die zweite umlaufende Kante 80 in der Ausnehmung 78 die erste umlaufende Kante 66 an dem vorspringenden Ansatz 64 hintergreift, so daß die Zusatzmatte 42 lösbar fixiert ist, ohne daß die Zusatzmatte 42 im Bereich unmittelbar oberhalb der Befestigungsanordnung 56' nach unten oder nach oben gewölbt ist. Um die Zusatzmatte 42 von dem Bodenbelag 44 abzulösen und wieder an dem Bodenbelag 44 zu befestigen, muß diese in Richtung des Pfeiles b bewegt werden, wobei eine entsprechende Kraft aufgebracht werden muß, um die umlaufenden Kanten 66,80 elastisch zu verformen, so daß diese aneinander vorbeibewegt werden können.

Fig. 5 zeigt eine zweite Ausführungsform 56" der Befestigungsanordnung, die der ersten Ausführungsform ähnelt, so daß ähnliche Teile mit gleichen Bezugszeichen versehen sind und die obigen Ausführungen entsprechend gelten. Im folgenden wird daher lediglich auf die Unterschiede zur ersten Ausführungsform eingegangen. Das erste Befestigungselement von Fig. 5 entspricht dem ersten Befestigungselement 20 von Fig. 2, d. h. die umlaufende Kante in der Ausnehmung 36 ist in mehrere, an Zungen 40 angeordnete Kantenabschnitte 38',38" unterteilt. Die umlaufende Kante 66 an dem vorspringenden Ansatz 64 des zweiten Befestigungsteiles 60 ist nicht wulstförmig wie bei der Ausführungsform von Fig. 4, sondern in der Form einer Klinke ausgebildet. Die Kantenabschnitte 38',38" drücken in dem in Fig. 5 dargestellten verbundenen Zustand seitlich gegen den vorspringenden Ansatz 64, so daß dieser form- und kraftschlüssig in der Ausnehmung 38 befestigt ist.

Den Ausführungsformen von Fig. 4 und 5 ist gemeinsam, daß die Platte 62 kreislinienförmig auf dem ersten Befestigungselement 58,20 bzw. dem rohrförmigen Element 70,28 desselben aufliegt. Auf diese Weise ist ausgeschlossen, daß Schmutzpartikel o. ä. zwischen die beiden Befestigungselemente geraten, was bei einer flächigen Auflage möglich ist. Darüber hinaus fallen Schmutzpartikel o. ä. durch die schräge Anordnung des Kragens 74 bzw. 32 seitlich heraus. Somit trägt die linienförmige Auflage sowie die Schrägstellung des Kragens zu einer sicheren Befestigung bei.

## Patentansprüche

1. Fußbodenbelag für ein Kraftfahrzeug mit einem Bodenbelag (2,44), einer Zusatzmatte (42) und mindestens einer Befestigungsanordnung (12,56',56") zur Befestigung der Zusatzmatte (42) an dem Bodenbelag (2,44), wobei die Befestigungsanordnung (12,56',56'') ein erstes Befestigungselement (20,58) aufweist, das lösbar mit einem komplementären zweiten Befestigungselement (60), das an der Zusatzmatte (42) vorgesehen ist, verbindbar ist und das erste Befestigungselement (20,58) in den Bodenbelag (2,44) eingelassen ist, wobei das nach oben weisende distale Ende des ersten Befestigungselementes (20,58) höchstens auf einer Ebene mit der Florseite des Bodenbelages (2,44) angeordnet ist,
wobei das zweite Befestigungselement (60) einen vorspringenden Ansatz (64) aufweist, der formschlüssig in eine Ausnehmung (36,78) in dem ersten Befestigungselement (20,58) passt, und
eine der Zusatzmatte (42) zugewandte Platte (62) aufweist, die an der Rückseite (68) der Zusatzmatte (42) befestigt ist,
**dadurch gekennzeichnet, daß** zwischen der Florseite des Bodenbelages (2,44) und dem nach oben weisenden distalen Ende des ersten Befestigungselementes (20,58) ein Abstand (a) besteht, so daß oberhalb des ersten Befestigungselementes (20,58) ein seitlich begrenzter Freiraum (42,82) besteht, in den die Platte (62) einlegbar ist .

2. Fußbodenbelag nach Anspruch 1, **dadurch gekennzeichnet, daß** der Bodenbelag (2) mindestens eine Abdeckkappe (16) aufweist, die mit dem ersten Befestigungselement (20,58) lösbar verbunden ist, wobei das nach oben weisende distale Ende der Abdeckkappe (16) in einer Ebene mit der Florseite des Bodenbelages (2) angeordnet ist.

3. Fußbodenbelag für ein Kraftfahrzeug nach einem der Ansprüche 1 oder 2, **dadurch gekennzeichnet, daß** der Fußbodenbelag mindestens eine Zusatzmatte (42) und die Befestigungsanordnung (56',56") ein zweites Befestigungselement (60) aufweist, das lösbar mit dem ersten Befestigungselement (20,58) verbindbar ist, wobei das zweite Befestigungselement (60) an der Rückseite (68) der Zusatzmatte (42) befestigt ist, so daß es im verbundenen Zustand unsichtbar ist.

4. Fußbodenbelag nach einem der vorangehenden Ansprüche, **dadurch gekennzeichnet, daß** der vorspringende Ansatz (64) eine erste umlaufende Kante (66) aufweist, die von einer zweiten umlaufenden Kante in der Ausnehmung (36,78) hintergreifbar ist.

5. Fußbodenbelag nach einem der vorangehenden Ansprüche, **dadurch gekennzeichnet, daß** der vorspringende Ansatz (64) und die Ausnehmung (36,78) im wesentlichen zylindrisch ausgebildet sind.

6. Fußbodenbelag nach einem der vorangehenden Ansprüche, **dadurch gekennzeichnet, daß** die zweite umlaufende Kante von mehreren Kantenabschnitten (38',38") gebildet wird, die elastisch radial nach außen verschiebbar sind.

7. Fußbodenbelag nach Anspruch 6, **dadurch gekennzeichnet, daß** die Kantenabschnitte (38',38") bei eingesetztem vorspringenden Ansatz (64) seitlich gegen den vorspringenden Ansatz (64) drücken.

8. Fußbodenbelag nach einem der vorangehenden Ansprüche, **dadurch gekennzeichnet, daß** die Platte (62) an die Rückseite (68) der Zusatzmatte (42) geklebt oder geschweißt ist.

## Claims

1. Floor covering for a motor vehicle with a floor covering (2, 44), an additional mat (42) and at least one fastening device (12, 56', 56") for fastening the additional mat (42) to the floor covering (2, 44), wherein the fastening device (12, 56', 56") exhibits a first fastening element (20, 58) which can be detachably connected to a complementary second fastening element (60), which is provided on the additional mat (42), the first fastening element (20, 58) is let into the floor covering (2, 44), and wherein the upwardly directed distal end of the first fastening element (20, 58) is arranged no higher than in the same plane as the pile side of the floor covering (2, 44),
wherein the second fastening element (60) exhibits a projecting shoulder (64) which fits positively into a recess (36, 78) in the first fastening element (20, 58), and
exhibits a plate (62) which faces the additional mat (42) and which is secured to the back (68) of the additional mat (42),
**characterised in that** there is a distance (a) between the pile side of the floor covering (2, 44) and the upwardly directed distal end of the first fastening element (20, 58), so that there is laterally limited clearance (42, 82) above the first fastening element (20, 58) into which the plate (62) may be inserted.

2. Floor covering according to claim 1, **characterised in that** the floor covering (2) exhibits at least one covering cap (16) which is detachably connected to the first fastening element (20, 58), wherein the upwardly directed distal end of the covering cap (16) is arranged in the same plane as the pile side of the floor covering (2).

3. Floor covering for a motor vehicle according to claims 1 or 2, **characterised in that** the floor covering exhibits at least one additional mat (42) and the fastening device (56', 56") exhibits a second fastening element (60) which is detachably connected to the first fastening element (20, 58), wherein the second fastening element (60) is secured to the back (68) of the additional mat (42), so that it is invisible when connected.

4. Floor covering according to one of the preceding claims, **characterised in that** the projecting shoulder (64) exhibits a first peripheral edge (66) which can be locked in the recess (36, 78) by a second peripheral edge.

5. Floor covering according to one of the preceding claims, **characterised in that** the projecting shoulder (64) and the recess (36, 78) are designed essentially cylindrically.

6. Floor covering according to one of the preceding claims, **characterised in that** the second peripheral edge is formed by several edge sections (38', 38") which can be displaced elastically and radially outwards.

7. Floor covering according to claim 6, **characterised in that** the edge sections (38', 38") press laterally against the projecting shoulder (64) when the projecting shoulder (64) is used.

8. Floor covering according to one of the preceding claims, **characterised in that** the plate (62) is glued or welded to the back (68) of the additional mat (42).

## Revendications

1. Revêtement de plancher pour un véhicule muni d'un revêtement de sol (2, 44), d'une natte supplémentaire (42) et d'au moins un dispositif de fixation (12, 56', 56") pour fixer la natte supplémentaire (42) sur le revêtement de sol (2, 44), le dispositif de fixation (12, 56', 56'') présentant un premier élément de fixation (20, 58) pouvant être relié de manière amovible à un deuxième élément de fixation (60) complémentaire prévu sur la natte supplémentaire (42) et le premier élément de fixation (20, 58) étant introduit dans le revêtement de sol (2, 44), l'extrémité distale tournée vers le haut du premier élément de fixation (20, 58) étant disposée au maximum sur un même plan avec le côté plancher du revêtement de sol (2, 44),
le deuxième élément de fixation (60) présentant un appendice en saillie (64) adapté par complémentarité de forme dans un évidement (36, 78) dans le premier élément de fixation (20, 58) et présentant
un panneau (62) tourné vers la natte supplémentaire (42) et fixé au dos (68) de la natte supplémentaire (42),
**caractérisé en ce qu'**un écart (a) existe entre le côté plancher du revêtement de sol (2, 44) et l'extrémité distale tournée vers le haut du premier élément de fixation (20, 58) de sorte que, au-dessus du premier élément de fixation (20, 58), se trouve un espace (42, 82) limité latéralement, dans lequel le panneau (62) peut être inséré.

2. Revêtement de plancher selon la revendication 1, **caractérisé en ce que** le revêtement de sol (2) présente au moins un capot de fermeture (16) relié de manière amovible au premier élément de fixation (20, 58), l'extrémité distale tournée vers le haut du capot de fermeture (16) étant disposée dans un même plan que le côté plancher du revêtement de sol (2).

3. Revêtement de plancher pour un véhicule selon l'une quelconque des revendications 1 et 2, **caractérisé en ce que** le revêtement de plancher présente au moins une natte supplémentaire (42) et le dispositif de fixation (56' , 56'') présente un deuxième élément de fixation (60) qui peut être relié de manière amovible au premier élément de fixation (20, 58), le deuxième élément de fixation (60) étant fixé au dos (68) de la natte supplémentaire (42) de manière à être invisible à l'état relié.

4. Revêtement de plancher selon l'une quelconque des revendications précédentes, **caractérisé en ce que** l'appendice en saillie (64) présente une première arête périphérique (66) pouvant être mise en prise par une deuxième arête périphérique dans l'évidement (36, 78).

5. Revêtement de plancher selon l'une quelconque des revendications précédentes, **caractérisé en ce que** l'épaulement en saillie (64) et l'évidement (36, 78) sont conçus essentiellement de manière cylindrique.

6. Revêtement de plancher selon l'une quelconque des revendications précédentes, **caractérisé en ce que** la deuxième arête périphérique est formée par plusieurs segments d'arête (38', 38") pouvant être poussés de manière élastique radialement vers l'extérieur.

7. Revêtement de plancher selon la revendication 6, **caractérisé en ce que** les segments d'arête (38', 38") poussent latéralement contre l'appendice en saillie (64) lorsque ce dernier est installé.

8. Revêtement de plancher selon l'une quelconque des revendications précédentes, **caractérisé en ce que** le panneau (62) est collé ou soudé au dos (68) de la natte supplémentaire (42).
